# NEUE EUROPÄISCHE PATENTSCHRIFT

(11) **EP 0 955 228 B2**
(45) Veröffentlichungstag und Bekanntmachung des Hinweises auf die Entscheidung über den Einspruch: **11.07.2012**
(45) Hinweis auf die Patenterteilung: 16.06.2004
(21) Anmeldenummer: 99108024.3
(22) Anmeldetag: 23.04.1999
(51) Int. Cl.: B62D 25/20, B62D 21/10, B62D 27/04

(54) **Kraftfahrzeug mit Schwingungstilger**
Motor vehicle with dynamic damper
Véhicule automobile avec amortisseur dynamique

(30) Priorität: 08.05.1998 DE 19820617
(43) Veröffentlichungstag der Anmeldung: 10.11.1999
(73) Patentinhaber: Wilhelm Karmann GmbH, 49084 Osnabrück (DE); ERAS GmbH, 37085 Göttingen (DE)
(72) Erfinder: Seeliger, Hans-Wolfgang, 49074 Osnabrück (DE); Bunsmann, Winfried, 49143 Bissendorf (DE); Gausmann, Werner, Dr., 49074 Osnabrück (DE); Licher, Siegfried, 49124 Georgsmarienhütte (DE); Breitbach, Elmar, Prof. Dr., 37075 Göttingen (DE); Hanselka, Holger, Prof. Dr., 38122 Braunschweig (DE); Melcher, Jörg, 38165 Lehre (DE); Wimmel, Roger, 37124 Rosdorf-Mengershausen (DE)
(74) Vertreter: Kronthaler, Wolfgang N.K.

(56) Entgegenhaltungen:
- EP-A1- 0 616 412
- DE-A1- 3 821 368
- DE-A1- 19 811 787
- DE-C1- 4 310 825
- FR-A- 940 982
- JP-A- 5 319 307
- US-A- 3 211 491
- US-A- 5 074 587

## Beschreibung

Die Erfindung bezieht sich auf ein Kraftfahrzeug, insbesondere ein Cabriolet-Fahrzeug nach dem Oberbegriff des Anspruchs 1.

Bei landgestützten Kraftfahrzeugen, insbesondere bei Cabriolets mit einer selbsttragenden Karosserie, die aufgrund des fehlenden Daches bezüglich ihrer Stabilität geschwächt ist, aber auch bei Rahmenfahrzeugen, etwa bei Motorrädern oder bei Fahrzeugen mit Aluminiumkarosserien, die von einem Profilrahmen getragen sind, stellt sich das Problem, daß eine äußere Anregung einer Schwingung, wie sie etwa durch das Überfahren unebener Fahrbahnen auftritt, zu einer Schwingungsanregung der Karosserie führt. Derartige Fahrzeugschwingungen stören Fahrkomfort und -sicherheit. Eine Schwingungsübertragung auf die Karosserie bzw. den tragenden Rahmen ist trotz Dämpfungselementen im Fahrwerk nicht auszuschließen. Die Karosserie sollte daher, insbesondere bei einem Cabriolet, mit eigenen, fahrwerksunabhängigen Dämpfungselementen ausgestattet sein, die innerhalb kurzer Ansprechzeit die Schwingungsamplitude der Karosserie möglichst weitgehend verringern.

Es ist bekannt, der Karosseriestruktur sogenannte Schwingungstilger zuzuordnen, d. h. Dämpfungsmassen, die geeignet sind, Schwingungen bestimmter Frequenz, auf die die Tilger abgestimmt sind, zu dämpfen. Die Abstimmung ist jeweils nur für eine einzelne Frequenz möglich, zudem ist eine Anpassung an den jeweiligen Fahrzeugtyp notwendig, wobei die Anordnung der Tilger in Karosseriehohlräumen oder dergleichen konstruktiv schwierig ist. Die Tilger selbst haben eine hohe Masse, was angesichts eines gewünschten energetisch sparsamen Betriebes des Kraftfahrzeuges unerwünscht ist.

Ein Kraftfahrzeug gemäß den Oberbegriffen des Anspruchs 1 ist aus US-A-5074 587 bekannt.

Der Erfindung liegt das Problem zugrunde, eine Kraftfahrzeugkarosserie mit einer Schwingungsdämpfung auszustatten, die geeignet ist, direkt auf die Karosserie einzuwirken und dabei die o.g. Nachteile vermeidet.

Die Erfindung löst das Problem für ein Kraftfahrzeug mit einer selbsttragenden Karosserie, insbesondere ein Cabriolet-Fahrzeug, durch die Merkmale des Anspruchs 1. Hinsichtlich weiterer vorteilhafter Ausgestaltungen wird auf die Ansprüche 2 bis 12 verwiesen.

Durch die erfindungsgemäße Ausbildung eines Kraftfahrzeuges kann dieses unabhängig von Fahrwerksmaßnahmen auf eine äußere Schwingungsanregung der Karosserie durch Längenvariation von Streben reagieren. Damit ist ein adaptives Dämpfungssystem geschaffen, bei dem eine Aufnahmeeinheit die Beanspruchung einer Strebe, und damit die Amplitude einer anregenden Schwingung, als Meßwert an eine Steuereinheit übergibt, die dann ein vorzugsweise in der Strebe liegendes Stellglied mit einer Spannung beaufschlagt, woraufhin dieses eine Längenänderung bewirkt. Mit dieser Längenänderung einher geht eine Aussteifung der Karosserie, der die jeweilige Strebe zugeordnet ist. Die wesentlichen Teile der Schwingungsdämpfungseinrichtung sind daher in den jeweiligen Streben enthalten, so daß ihr baulicher Aufwand wie auch ihre Masse gering sind.

Besonders vorteilhaft erfüllt eine derartige Strebe eine Doppelfunktion, indem sie neben der Schwingungsdämpfung zusätzlich die Funktion eines Aussteifungsbauteils bei einer selbsttragenden Karosserie ausbildet. Derartige Aussteifungsbauteile bei selbsttragenden Karosserien sind bei Cabriolet-Fahrzeugen üblich und erstrecken sich beispielsweise im wesentlichen diagonal von Längsrandbereichen der Bodengruppe bis in einen mittleren Bereich, um auf diese Weise die Verwindungssteifigkeit zu erhöhen. Sofern derartige Aussteifungsstreben ohnehin vorhanden sind, ist daher die Zusatzmasse, um eine adaptive Schwingungsgegensteuerung zu erhalten, minimal. Gegenüber den üblichen Streben in diesem Bereich muß lediglich eine Teilung vorgenommen werden, in den mittleren Bereich werden dann die Aufnahmeeinheit und das Stellglied eingesetzt, die vorzugsweise Druck-Spannungs- bzw. Spannungs-Druck-Wandler enthalten.

Erfindungsgemäß ist eine Anpassung von Dämpfern an eine jeweilige Frequenz nicht notwendig, sondern die Längenveränderung der Streben kann bei verschiedensten Frequenzbereichen stattfinden und wird ausgelöst durch ein Überschreiten einer Mindestbeanspruchung der Strebe, d. h. durch die Höhe der Schwingungsamplitude. Dabei läßt sich eine Ansprechzeit in der Größenordnung von Millisekunden erreichen, die Auslenkung als Reaktion auf die zwischen den Anlenkungspunkten der Strebe festgestellte Beanspruchung liegt im Millimeterbereich. Als Steuereinheit kann eine Rechner Verwendung finden, dem mittels eines Lernprogramms eine möglichst optimale Reaktion auf die jeweiligen Verhältnisse eingegeben werden kann.

Weitere Vorteile und Merkmale ergeben sich aus in der Zeichnung dargestellten Ausführungsbeispielen des Gegenstandes der Erfindung. In der Zeichnung zeigt:
- Fig. 1: die Bodengruppe eines erfindungsgemäßen Kraftfahrzeuges mit sich diagonal erstreckenden Aussteifungsstreben,
- Fig. 2: eine weitere Bodengruppe eines erfindungsgemäßen Kraftfahrzeuges mit einer alternativen Anordnung von Aussteifungsstreben,

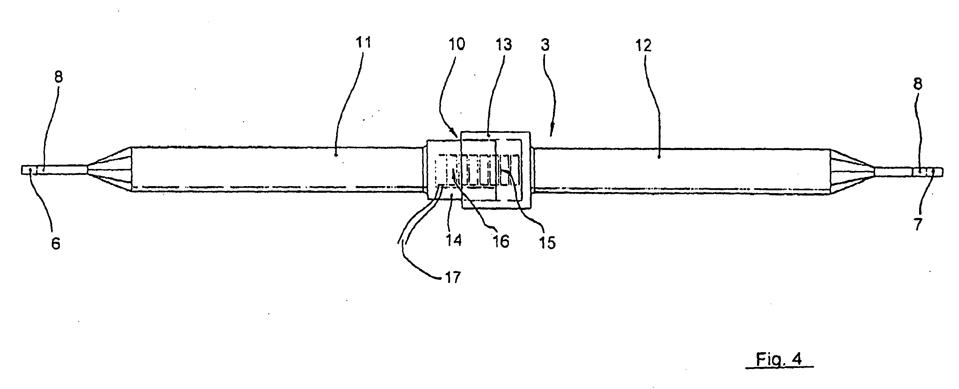

- Fig. 4: eine erfindungsgemäße Strebe in Gesamtansicht,

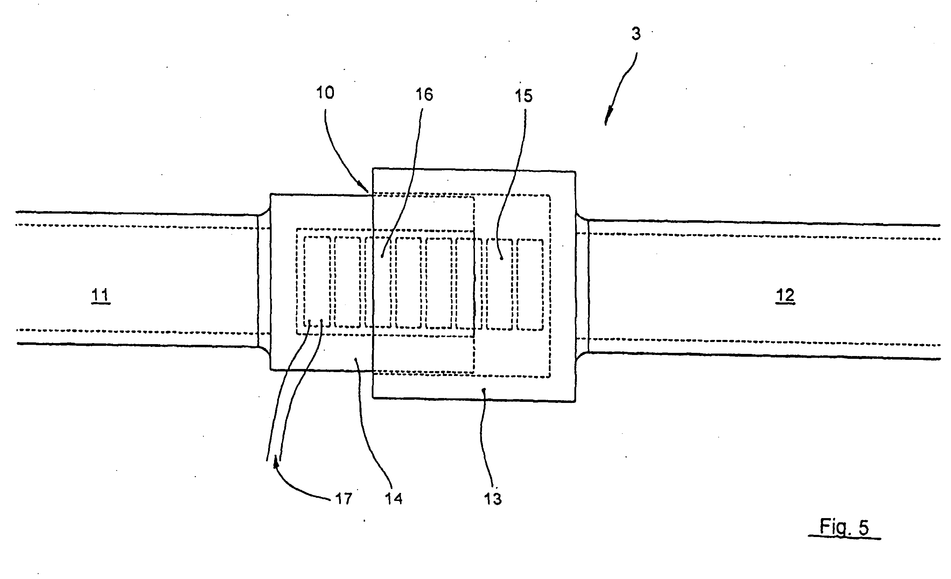

- Fig. 5: eine Teilansicht der ineinandergreifenden Hülsen der Strebe,
- Fig. 6: ein Diagramm der Schwingungsanregung und -tilgung durch die erfindungsgemäßen Streben.

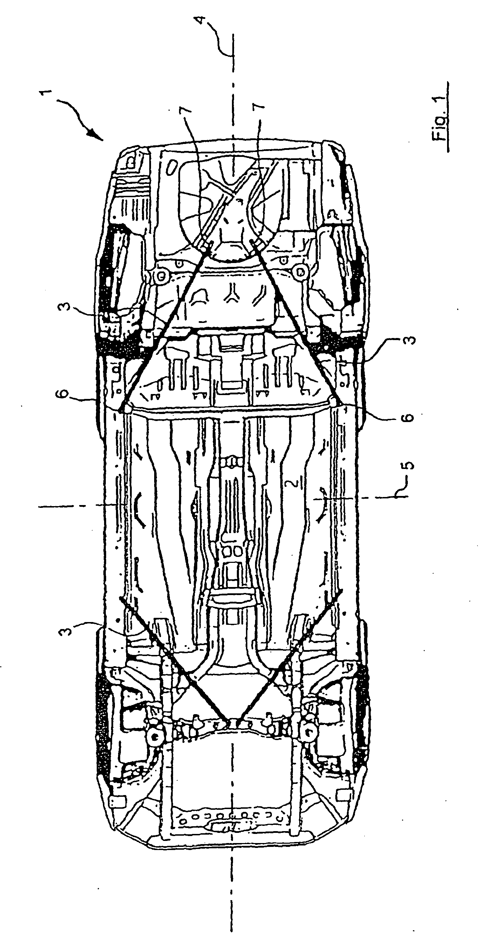

In einem Ausführungsbeispiel (Fig. 1) ist eine Kraftfahrzeugkarosserie 1, insbesondere Karosserie eines Cabriolet-Fahrzeugs, mit ihrer Bodengruppe 2 zugeordneten Streben 3 versehen, die symmetrisch bezüglich einer vertikalen Fahrzeuglängsebene 4 und einer vertikalen Fahrzeugquerebene 5 angeordnet sind. Derartige Aussteifungsstreben 3 sind grundsätzlich bekannt und als gesondert von den Karosserieblechen ausgebildete Profile dem Fahrzeugboden zugeordnet. Die Streben 3 sind an ihren Endpunkten 6 und 7 jeweils im Außenbereich bzw. einem mittleren Bereich der Bodengruppe 2 an der Karosserie 1 festgelegt. Hierfür sind beispielsweise die Enden 6 und 7 der Strebe 3 flanschartig abgeflacht und weisen Durchgangsbohrungen 8,9 auf, die von Befestigungsmitteln durchgriffen werden. Auch ein Verschweißen oder andersartiges Festlegen der Streben 3 an der Karosserie 1 ist möglich.

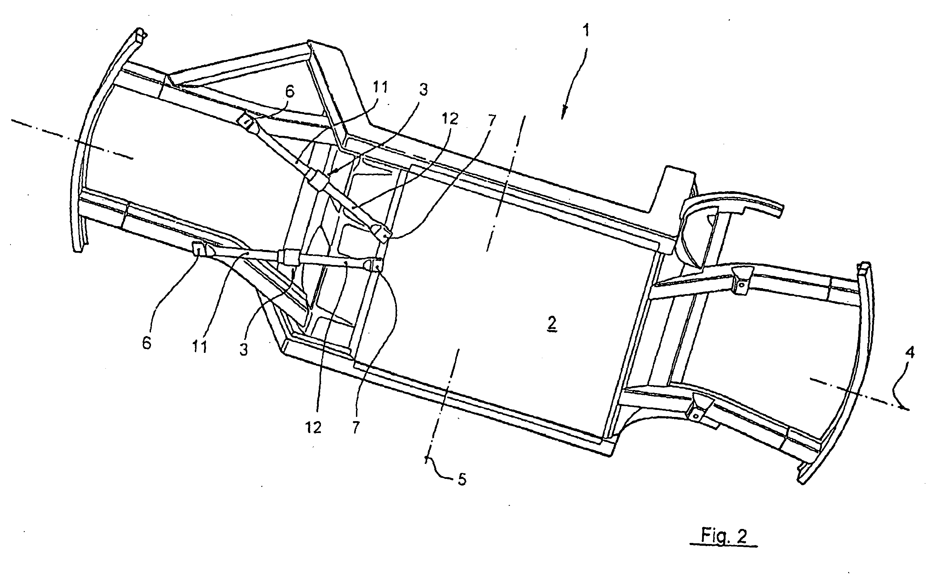

Gemäß Fig. 2 ist die Anordnung der Streben 3 derart vorgenommen, daß deren der Fahrzeugquermitte 5 zugewandte Enden 7 aufeinander zulaufen und die äußeren Enden 6 dem Bereich der Radhäuser zugeordnet sind. Die Festlegung der Strebenenden 6 kann an Teilen der Karosserie erfolgen.

Die Anordungen der Streben 3 bezüglich der Karosserie sind so zu wählen, daß sie Karosserieverwindungen entgegenwirken, beispielsweise durch die gezeigten Diagonalverläufe. Weiterhin können erfindungsgemäße Streben auch beispielsweise als Domstreben über den vorderen oder hinteren Federdomen eingesetzt werden, in Seitenschwellern oder im Bereich von Querträgern oder Überrollbügeln, um nur einige Möglichkeiten zu nennen.

Die Streben 3 können in die Bodengruppe 2 oder in andere Bereiche der Karosserie 1 integriert sein und müssen keine gesonderten Bauteile ausbilden. Bei ohnehin vorhandenen Aussteifungsstreben der Karosserie 1 erfüllen diese bei erfindungsgemäßer Ausbildung eine Doppelfunktion: Sie dienen einerseits als herkömmliche Aussteifungsbauteile, zudem erfüllen sie eine adaptive Schwingungsdämpfung, sind also neben den passiven Aussteifungsbauteilen auch aktive Beeinflussungsglieder des Schwingungsverhaltens der Karosserie 1.

Erfindungsgemäße Streben 3 können in verschiedensten Formen, auch als Winkelstreben oder dergleichen, ausgebildet sein. Es kommen Rohr-, Kasten- oder andersgeartete Profile in Frage. Die Strebe weist zumindest einen Teilungsbereich 10 auf, an dem die Strebenteile 11,12 relativ zueinander verschieblich sind. Im Teilungsbereich 10 ist eine äußere Hülse 13 gegen eine innere Hülse 14 verspannt. Im Innern der ineinandergreifenden Hülsen 13,14 befinden sich das Stellglied 15 und die Aufnahmeeinheit 16. Mit dieser wird die Beanspruchung der Strebe 3 erfaßt, d. h. insbesondere eine Stauchung oder Streckung der Strebe. Diese Beanspruchung wird in ein elektrisches Signal über Druck-Spannungs-Wandler der Aufnahmeeinheit 16 umgesetzt, und das elektrische Signal wird über Steuerkabel 17 an eine Steuereinheit - nicht eingezeichnet - übertragen. Von dieser geht ein Steuersignal aus zur Beeinflussung des Stellglieds 15, das einen Spannungs-Druck-Wandler, beispielsweise ein Piezoelement, enthalten kann, das in Reaktion auf eine Eingangsspannung seine innere Struktur und damit seine Außenabmessungen vermindert. Das Stellglied 15 bewirkt daher eine Längenvariation, die auf die beiden Spannhülsen 13,14 einwirkt und somit die gegeneinander verschieblichen Teile 11,12 der Strebe 3 relativ zueinander bewegt. Über eine Längenzunahme des Stellglieds 15 wird daher eine Längenzunahme der Strebe 3 erreicht. In der Strebe 15 können mehrere Piezoelemente oder andere Spannungs-Druck-Wandler hintereinander angeordnet sein, ebenso wie in der Aufnahmeeinheit 16 mehrere Druck-Spannungs-Wandler angeordnet sein können.

Anstelle der Piezoelemente kommen für die Aufnahmeeinheit 16 bzw. das Stellglied 15 auch andere Bauteile und Längenbeeinflussungsmöglichkeiten in Frage.

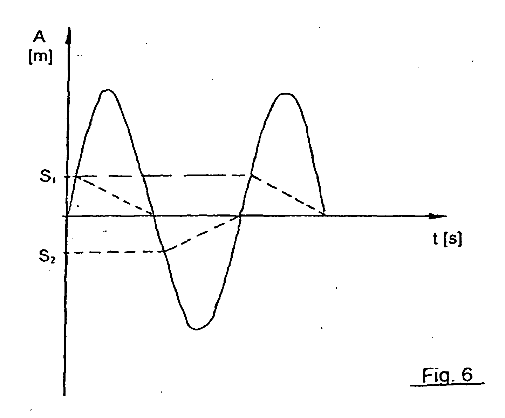

In jedem Fall wird eine Beanspruchung der Strebe 3, wie sie durch eine Verwindung des Fahrzeugs hervorgerufen wird, über ihre endseitigen Festlegungen 6 und 7 auf die Aufnahmeeinheit 16 übertragen und detektiert, von hier aus wird ein entsprechendes Signal an die Steuereinheit weitergeleitet. Dieses Signal löst bei Überschreiten eines Schwellwerts (Fig. 6) das Stellglied 15 aus, das durch Längenänderungen auf die äußere anregende Schwingung reagiert. Insgesamt ist das Stellglied 15 permanent unter Druck gehalten, die Reaktion wird daher in jedem Fall in einer mehr oder weniger großen Streckung der Strebe 3 erfolgen. Die anregende Schwingung, in Fig. 6 als durchgezogene Linie dargestellt, wird bei Überschreiten des Schwellwerts durch Aussteifung mittels Längenänderung der Strebe 3 absorbiert. Die in Fig. 6 eingezeichnete durchgezogene Schwingungskurve wird entsprechend der gestrichelten Linie nach Auslösung des Stellglieds 15 bei Erreichen des Schwellwerts S₁ auf nahezu Null zurückgeführt. Entsprechendes gilt für Erreichen des Schwellwertes bei S₂. Die Schwingungen werden daher jeweils fast vollständig eliminiert, wobei der Schwellwert und die Reaktion für verschiedene Frequenzen über ein Lernprogramm der Steuereinheit optimiert werden können. Insbesondere ist hierbei der niederfrequente Bereich zwischen 1 Hz und 10 Hz interessant, auch bei höheren Frequenzen bis über 100 Hz arbeitet das System zuverlässig, eine Einschränkung auf nur bestimmte Frequenzen liegt nicht vor. Die Ansteuerung erfolgt allein durch die jeweilige Amplitude der Schwingung, ihre Frequenz ist variabel.

Insgesamt ist erfindungsgemäß ein Regelkreis ausgebildet, der eine auf das Fahrzeug einwirkende Schwingung, die eine Störkraft darstellt, über Sensoren der Aufnahmeeinheit 16 in einer Strebe 3 detektiert und dieser Störkraft eine Gegenkraft entgegensetzt im Sinne einer adaptiven Regelung, wobei die Adaption während der Fahrt erfolgen kann. Das System ist daher in der Lage, auf einen weiten Frequenzbereich mit einer jeweils die Schwingung auslöschenden Gegenkraft zu reagieren und benötigt lediglich eine Steuereinheit, die außerhalb der Strebe 3 angeordnet ist, sowie in der Strebe angeordnete Sensoren der Aufnahmeeinheit 16 und Aktuatoren des Stellglieds 15.

## Patentansprüche

1. Kraftfahrzeug, insbesondere Cabriolet-Fahrzeug, mit einer Fahrzeugkarosserie (1), die einen Längsverlauf aufweisende Streben (3) aufweist, **dadurch gekennzeichnet, daß** zumindest eine der Streben (3) längenvariabel ausgebildet ist und diese ein Aussteifungsbauteil der Karosserie (1) ausbildet, wobei den Streben (3) eine Aufnahmeeinheit (16) zur Erfassung einer Längsbeanspruchung, ein Stellglied (15) zum Bewirken einer Gegenkraft sowie eine Steuereinheit für das Stellglied (15) zugeordnet sind, die Streben (3) in einem mittleren Bereich geteilt sind und Aktuatoren des Stellglieds (15) und Sensoren der Aufnahmeeinheit (16) innerhalb der Streben (3) angeordnet sind.

2. Kraftfahrzeug nach Anspruch 1, **dadurch gekennzeichnet, daß** die Strebe (3) ein gegenüber Karosserieblechen gesondertes Bauteil ausbilden.

3. Kraftfahrzeug nach einem der Ansprüche 1 oder 2, **dadurch gekennzeichnet, daß** mehrere Streben (3) in symmetrischer Anordnung gemäß Anspruch 1 ausgebildet sind.

4. Kraftfahrzeug nach Ansprüche 3, **dadurch gekennzeichnet, daß** sich die Streben (3) von Eckbereichen der Karosserie (1) bis in einen mittleren Bereich des Fahrzeugbodens erstrecken.

5. Kraftfahrzeug nach einem oder mehreren der Ansprüche 1 bis 4, **dadurch gekennzeichnet, daß** die Streben (3) ein mehrteiliges, an beiden Endbereichen (6 ; 7 ) festgelegtes Rohr-oder Rahmenprofil umfassen.

6. Kraftfahrzeug nach Anspruch 5, **dadurch gekennzeichnet, daß** die Streben (3) im Teilungsbereich (10) zwei den jeweiligen Strebenteilen (11; 12) zugeordnete, ineinandergreifende Spannhülsen (13; 14) umfassen.

7. Kraftfahrzeug nach Anspruch 6, **dadurch gekennzeichnet, daß** die Aufnahmeeinheit (16) dem Stellglied (15) benachbart ist.

8. Kraftfahrzeug nach Anspruch 7 **dadurch gekennzeichnet, daß** die Steuereinheit aufgenommene Meßwerte in elektrische Spannungen zur Ansteuerung des Stellglieds (15) umsetzt.

9. Kraftfahrzeug nach Anspruch 8, **dadurch gekennzeichnet, daß** die Steuereinheit außerhalb der Streben (3) angeordnet ist.

10. Kraftfahrzeug nach einem oder mehreren der Ansprüche 1 bis 9, **dadurch gekennzeichnet, daß** die Aufnahmeeinheit (16) Druck-Spannungs-Wandler enthält und eine delektierte Beanspruchung der Streben (3) als elektrisches Signal weiterleitet.

11. Kraftfahrzeug nach einem oder mehreren der Ansprüche 1 bis 10, **dadurch gekennzeichnet, daß** das Stellglied (15) einen Spannüngs-Druck-Wandler enthält und ein elektrisches Eingangssignal in eine auf die Strebenteile (11; 12) im Sinne einer Relativbewegung wirkende Kraft umsetzt.

12. Kraftfahrzeug nach einem oder mehreren der Ansprüche 1 bis 11, **dadurch gekennzeichnet, daß** in der Aufnahmeeinheit (16) und/oder dem Stellglied (15) Piezoelemente enthalten sind.

## Claims

1. A motor vehicle, in particular a convertible vehicle, with a vehicle body (1) comprising longitudinally extending struts (3), **characterised in that** at least one of said struts (3) is variable in length and forms a stiffening component of the vehicle body (1), said struts (3) having associated with them a sensing unit (16) for detecting a longitudinal stress, a control element (15) for causing an opposing force, as well as a control unit for the control element (15), said struts (3) being divided in a central region and actuators of the control element (15) as well as sensors of the sensing unit (16) being arranged inside the struts (3).

2. The motor vehicle according to claim 1, **characterised in that** the struts (3) form a component separate from vehicle body panels.

3. The motor vehicle according to any one of claims 1 or 2, **characterised in that** a plurality of symmetrically arranged struts (3) are formed in accordance with claim 1.

4. The motor vehicle according to claim 3, **characterised in that** the struts (3) extend from corner regions of the vehicle body (1) to a central region of the vehicle floor.

5. The motor vehicle according to one or more of claims 1 to 4, **characterised in that** the struts (3) comprise a multi-piece tube or frame profile which is fixed at both end regions (6; 7).

6. The motor vehicle according to claim 5, **characterised in that** the struts (3) comprise two interengaging clamping sleeves (13; 14) in the dividing region (10), each clamping sleeve (13; 14) being associated with the respective part (11; 12) of the struts.

7. The motor vehicle according to claim 6, **characterised in that** the sensing unit (16) is adjacent to the control element (15).

8. The motor vehicle according to claim 7, **characterised in that** the control unit converts measurements that are sensed into electrical voltages to operate the control element (15).

9. The motor vehicle according to claim 8, **characterised in that** the control unit is arranged outside the struts (3).

10. The motor vehicle according to one or more of claims 1 to 9, **characterised in that** the sensing unit (16) contains pressure-to-voltage converters and passes on a stress on the struts (3) that is detected in the form of an electrical signal.

11. The motor vehicle according to one or more of claims 1 to 10, **characterised in that** the control element (15) contains a voltage-to-pressure converter and converts an electric input signal into a force acting on the strut parts (11; 12) in the sense of a relative movement.

12. The motor vehicle according to one or more of claims 1 to 11, **characterised in that** piezo elements are contained in the sensing unit (16) and/or the control element (15).

## Revendications

1. Véhicule automobile, notamment de type cabriolet, avec une carrosserie (1) comprenant des entretoises (3) orientées longitudinalement, **caractérisé en ce qu'**au moins l'une des entretoises (3) est constituée de façon à pouvoir varier en longueur et constitue une pièce de rigidification de la carrosserie (1), auxquelles entretoises (3) sont associés une unité d'enregistrement (16) pour l'enregistrement d'une sollicitation longitudinale, un organe de réglage (15) pour créer une contre-force ainsi qu'une unité de commande pour l'organe de réglage (15), lesdites entretoises (3) étant divisées en une zone médiane et les acteurs de l'organe de réglage (15) ainsi que les capteurs de l'unité d'enregistrement (16) étant disposés à l'intérieur des entretoises (3).

2. Véhicule automobile selon la revendication 1, **caractérisé en ce que** les entretoises (3) constituent une pièce séparée par rapport à des tôles de carrosserie.

3. Véhicule automobile selon l'une quelconque des revendications 1 ou 2, **caractérisé en ce que** plusieurs entretoises (3) sont disposées symétriquement selon la revendication 1.

4. Véhicule automobile selon la revendication 3, **caractérisé en ce que** les entretoises (3) s'étendent des coins de la carrosserie (1) jusqu'à une zone médiane du dessous de caisse.

5. Véhicule automobile selon l'une ou plusieurs des revendications 1 à 4, **caractérisé en ce que** les entretoises (3) comprennent un tube ou profilé de cadre en plusieurs pièces, immobilisé aux deux extrémités (6; 7).

6. Véhicule automobile selon la revendication 5, **caractérisé en ce que** les entretoises (3) comprennent dans la zone de division (10) deux manchons de tension (13; 14) associés aux parties d'entretoise respectives (11; 12), qui s'engagent l'un dans l'autre.

7. Véhicule automobile selon la revendication 6, **caractérisé en ce que** l'unité d'enregistrement (16) avoisine l'organe de réglage (15).

8. Véhicule automobile selon la revendication 7, **caractérisé en ce que** l'unité de commande transforme des valeurs de mesure enregistrées en tensions électriques pour la commande de l'organe de réglage (15).

9. Véhicule automobile selon la revendication 8, **caractérisé en ce que** l'unité de commande est disposée à l'extérieur des entretoises (3).

10. Véhicule automobile selon l'une ou plusieurs des revendications 1 à 9, **caractérisé en ce que** l'unité d'enregistrement (16) contient des convertisseurs pression/tension et transmet en tant que signal électrique une sollicitation détectée des entretoises (3).

11. Véhicule automobile selon l'une ou plusieurs des revendications 1 à 10, **caractérisé en ce que** l'organe de réglage (15) contient un convertisseur tension/pression et transforme un signal électrique d'entrée en une force agissant sur les pièces d'entretoise (11; 12) dans le sens d'un mouvement relatif.

12. Véhicule automobile selon l'une ou plusieurs des revendications 1 à 11, **caractérisé en ce que** des éléments piézo-électriques sont contenus dans l'unité d'enregistrement (16) et/ou l'organe de réglage (15).
